# EUROPÄISCHE PATENTSCHRIFT

(11) **EP 2 382 092 B1**
(45) Veröffentlichungstag und Bekanntmachung des Hinweises auf die Patenterteilung: **17.04.2019**
(21) Anmeldenummer: 09799314.1
(22) Anmeldetag: 14.12.2009
(51) Int. Cl.: B32B 27/30, C08F 297/04, C08L 25/06, C08L 25/10, C08L 51/06, C08L 53/02

(54) **PHASENSEPARIERENDE BLOCKCOPOLYMERE AUS UNVERTRÄGLICHEN HARTBLÖCKEN UND FORMMASSEN MIT HOHER STEIFIGKEIT**
PHASE-SEPARATING BLOCK COPOLYMERS COMPRISING INCOMPATIBLE HARD BLOCKS AND MOULDING COMPOSITIONS HAVING A HIGH STIFFNESS
COPOLYMÈRES SÉQUENCÉS À SÉPARATION DE PHASE, COMPOSÉS DE BLOCS DURS INCOMPATIBLES, ET MATIÈRES DE MOULAGE DE GRANDE RIGIDITÉ

(30) Priorität: 23.12.2008 EP 08172791
(43) Veröffentlichungstag der Anmeldung: 02.11.2011
(73) Patentinhaber: INEOS Styrolution Europe GmbH, 60325 Frankfurt am Main (DE)
(72) Erfinder: KNOLL, Konrad, 68199 Mannheim (DE); KOCH, Jürgen, 67141 Neuhofen (DE); VERLINDEN, Geert, 9190 Stekene (BE); WEIDISCH, Roland, 39218 Schönbeck (DE); CHAROENSIRISOMBOON, Piyada, 67251 Freinsheim (DE); WAGNER, Daniel, 67098 Bad Dürkheim (DE)
(74) Vertreter: Jacobi, Markus Alexander
(86) Internationale Anmeldenummer: PCT/EP2009/067019
(87) Internationale Veröffentlichungsnummer: WO 2010/072596

(56) Entgegenhaltungen:
- EP-A1- 1 498 438
- EP-A1- 1 669 407
- WO-A1-2006/074819
- WO-A1-2009/112549
- DE-A1- 19 858 141
- DE-A1- 19 914 075

## Beschreibung

Die Erfindung betrifft ein Blockcopolymer mit einem gewichtsmittleren Molekulargewicht Mw von mindestens 100.000 g/mol, enthaltend
a) mindestens einen Block S aus 95 bis 100 Gew.-% vinylaromatischen Monomeren und 0 bis 5 Gew.-% Dienen und
b) mindestens einen Copolymerblock (S/B)A aus 63 bis 80 Gew.-% vinylaromatischen Monomeren und 20 bis 37 Gew.-% Dienen mit einer Glasübergangstemperatur TgA im Bereich von 5 bis 30°C,
wobei der Gewichtsanteil der Summe aller Blöcke S im Bereich von 50 bis 70 Gew.-%, bezogen auf das Block- oder Pfropfcopolymer, liegt, und das Blockcopolymer A eine lineare Struktur mit der Blockfolge Si-(S/B)_{A}-S₂-(S/B)_{A}-S₃ aufweist, wobei S₁, S₂ und S₃ jeweils für einen Block S stehen, sowie Mischungen davon und deren Verwendung.

Die US 3,639,517 beschreibt sternförmig verzweigte Styrol-Butadien-Blockcopolymere mit 75 bis 95 Gewichtsprozent endständigen Blöcken aus vinylaromatischen Monomeren und 5 bis 30 Gewichtsprozent elastomeren, überwiegend aus konjugierten Dieneinheiten bestehender Blöcke. Sie können mit Standardpolystyrol zu hochtransparente Mischungen abgemischt werden. Mit zunehmendem Anteil Polystyrol erhöht sich der E-Modul auf Kosten der Zähigkeit. Mischungen mit etwa 40 Gewichtsprozent Polystyrol sind für die meisten Anwendungen schon zu spröde. Man kann meist nur 20 bis maximal 30 Gewichtsprozent Polystyrol bei noch akzeptabler Duktilität zumischen.

Sternförmige Blockcopolymere mit 40 Gew.-% Hartblöcken aus vinylaromatischen Monomeren und Weichblöcken mit statistischem Aufbau aus vinylaromatischen Monomeren und Dienen sind in WO 00/58380 beschrieben. Zur Erhöhung der Steifigkeit werden sie mit Standardpolystyrol abgemischt, wobei die Transparenz abnimmt. Sie ergeben selbst mit 60 Gewichtsprozent Polystyrol noch duktile Mischungen. Der Nachteil dieser Abmischungen ist die deutlich sichtbare Trübung, die für anspruchsvollere Anwendungen und dickere Teile unakzeptabel ist.

Die WO 2006/074819 beschreibt Mischungen von 5 bis 50 Gew.-% eines Blockcopolymeren A, welches ein oder mehrere Copolymerblöcke (B/S)A aus jeweils 65 bis 95 Gew.-% vinylaromatischen Monomeren und 35 bis 5 Gew.-% Dienen und einer Glasübergangstemperatur TgA im Bereich von 40° bis 90°C enthält, und 95 bis 50 Gew.-% eines Blockcopolymeren B, welches mindestens einen Hartblock S aus vinylaromatischen Monomeren und ein oder mehrere Copolymerblöcke (B/S)B aus jeweils 20 bis 60 Gew.-% vinylaromatischen Monomeren und 80 bis 40 Gew.-% Dienen und einer Glastemperatur TgB im Bereich von -70° bis 0°C enthält, zur Herstellung von Schrumpffolien. Die Mischungen haben eine Steifigkeit im Bereich von 700 bis maximal 1300 MPa.

Die EP-A 1 669 407 beschreibt Mischungen aus linearen Blockcopolymeren aus vinylaromatischen Monomeren und Dienen der Struktur (I) S1-B1-S2 und (II) B2-S3. Die Blöcke B1 und B2 können ausschließlich aus Dienen oder aus Dienen und vinylaromatischen Monomeren aufgebaut sein. Das Gewichtsverhältnis vinylaromatisches Monomer/Dien liegt für die Blöcke B1 und B2 bevorzugt im Bereich von 0,3 bis 1,5.

Die noch unveröffentlichte PCT/EP2008/061635 beschreibt transparente und zäh steife Formmassen auf Basis von Styrol-Butadien-Blockcopolymer-Mischungen, welche unter anderem 0 bis 30 Gew.-% eines Blockcopolymeren, welches mindestens einen Copolymerblock (B/S)_{A} aus jeweils 65 bis 95 Gew.-% vinylaromatischen Monomeren und 35 bis 5 Gew.-% Dienen und einer Glasübergangstemperatur Tg_{A} im Bereich von 40 bis 90 C und mindestens einen Copolymerblock (B/S)_{B} aus jeweils 1 bis 60 Gew.-% vinylaromatischen Monomeren und 99 bis 40 Gew.-% Dienen und einer Glasübergangstemperatur Tg_{B} im Bereich von -100 bis 0°C, enthalten können.

EP 1498438 A1 beschreibt Blockcopolymere von Vinylaromaten und Dienen und Mischungen derselben mit Polystyrol, insbesondere lineare Triblockcopolymere der Struktur S1-(B/I/S)-S2 mit Hartblöcken S1 und S2 und Dien-Vinylaromat-Copolymer Weichblöcken (B/l/S).

In der nicht vorveröffentlichten, prioritätsälteren WO 2009/112549 werden Mischungen von Standardpolystyrol mit Vinylaromat-Dien-Block- oder Pfropfcopolymeren offenbart. Prioritätsälter sind Styrol-Butadien-Blockcopolymere der allgemeinen Struktur S-(S/B)-S mit ein oder mehreren statistischen Weichblöcken (S/B). Der Anteil der Hartblöcke beträgt über 40 Gew.-%. Insbesondere werden SBS-Dreiblockcopolymere mit einem Butadiengehalt von 20 bis 60 Gew.-%, bevorzugt 30 bis 50 Gew.-%, wie z.B. Styrolux® 3G55 beschrieben.

Durch Abmischen von herkömmlichen Styrol-Butadien-Blockcopolymeren, beispielsweise Styrolux® mit Polystyrol kann je nach Mischungsverhältnis ein beliebiger Elastizitätsmodul von bis zu über 3000 MPa eingestellt werden. Erfahrungsgemäß bricht die Duktilität bei einem Elastizitätsmodul von über 1900 MPa jedoch völlig ein. Die Mischungen weisen dann ein ähnliches mechanisches Verhalten wie Polystyrol selbst auf und bieten gegenüber diesem keine Vorteile mehr.

Für Blisterverpackungen, tiefgezogene Behältnisse und Becher, Verpackungsmaterialien für elektronische Bauteile, wie extrudierte Hohlprofile, die als Transportröhren für Integrierte Schaltkreise eingesetzt werden, ist eine Kombination von hoher Steifigkeit und Duktilität in Verbindung mit sicherem Überschreiten der Streckspannung und guter Transparenz erforderlich. Für diese Anwendungen waren bisher Polystyrol und dessen Mischungen mit Styrol-Butadien-Blockcopolymeren nicht oder nur bedingt geeignet. Der Markt wurde bisher von Polyvinylchlorid (PVC), teilweise Polyethylenterephtalaten (PET) oder sehr teuren Spezialpolymeren abgedeckt.

Aufgabe der Erfindung war es, Blockcopolymere zu finden, die mit Polystyrolen zu transparenten und zäh-steifen Formmassen verarbeitbar sind. Die Mischungen sollten zu Formmassen mit hoher Steifigkeit verarbeitbar sein und insbesondere einen Elastizitätsmodul (E-Modul) von mehr als 1900 bis 2500 MPa in Kombination mit einer gewissen Duktilität im Zugversuch aufweisen.

Für Blisterverpackungen, tiefgezogene Behältnisse und Becher, Verpackungsmaterialien für elektronische Bauteile, wie extrudierte Hohlprofile, die als Transportröhren für Integrierte Schaltkreise eingesetzt werden, ist eine Kombination von hoher Steifigkeit und Duktilität in Verbindung mit sicherem Überschreiten der Streckspannung und guter Transparenz erforderlich. Für diese Anwendungen waren bisher Polystyrol und dessen Mischungen mit Styrol-Butadien-Blockcopolymeren nicht oder nur bedingt geeignet. Der Markt wurde bisher von Polyvinylchlorid (PVC), teilweise Polyethylenterephtalaten (PET) oder sehr teuren Spezialpolymeren abgedeckt.

Aufgabe der Erfindung war es, Blockcopolymere zu finden, die mit Polystyrolen zu transparenten und zäh-steifen Formmassen verarbeitbar sind. Die Mischungen sollten zu Formmassen mit hoher Steifigkeit verarbeitbar sein und insbesondere einen Elastizitätsmodul (E-Modul) von mehr als 1900 bis 2500 MPa in Kombination mit einer gewissen Duktilität im Zugversuch aufweisen.

Demgemäß wurden die oben genannten Block- und Pfropfcopolymeren, sowie Mischungen mit weiteren Styrolpolymeren gefunden.

Überraschend wurde nun gefunden, dass die erfindungsgemäßen Blockcopolymere, die einen oder mehrere Blöcke S/B mit einer Glasübergangstemperatur im Bereich von 5 bis 30°C enthalten, in Formmassen aus Polystyrol oder Polystyolblöcke enthaltenden Polymeren die Weichphase bilden und eine gegenüber herkömmlichen Formmassen aus Blockcopolymeren mit butadienreichen Blöcken eine stark erhöhte Streckspannung und einen höheren E-Modul bei gleichzeitiger Duktilität aufweisen.

### Block- oder Pfropfcopolymer:

Das erfindungsgemäße Blockcopolymer enthält
a) mindestens einen Block S aus 95 bis 100 Gew.-% vinylaromatischen Monomeren und 0 bis 5 Gew.-% Dienen und
b) mindestens einen Copolymerblock (S/B)A aus 63 bis 80 Gew.-% vinylaromatischen Monomeren und 20 bis 37 Gew.-% Dienen mit einer Glasübergangstemperatur TgA im Bereich von 5 bis 30°C, wobei der Gewichtsanteil der Summe aller Blöcke S im Bereich von 50 bis 70 Gew.-%, bezogen auf das Blockcopolymer A, liegt, und das Blockcopolymer A eine lineare Struktur mit der Blockfolge Si-(S/B)_{A}-S₂-(S/B)_{A}-S₃ aufweist, wobei S₁, S₂ und S₃ jeweils für einen Block S stehen.

Als vinylaromatische Monomere kommen beispielsweise Styrol, alpha-Methylstyrol, kernalkylierte Styrole wie p-Methylstyrol oder Tertiärbutylstyrol, oder 1,1-Diphenylethylen oder Mischungen davon in Betracht. Bevorzugt wird Styrol eingesetzt.

Bevorzugte Diene sind Butadien, Isopren, 2,3-Dimethylbutadien, 1,3-Pentadien, 1,3-Hexadien oder Piperylen oder deren Mischungen. Besonders bevorzugt sind Butadien und Isopren.

Die gewichtsmittlere Molmasse Mw des Blockcopolymeren liegt bevorzugt im Bereich von 250.000 bis 350.000 g/mol.

Bevorzugt bestehen die Blöcke S aus Styroleinheiten. Bei den durch anionische Polymerisation hergestellten Polymeren erfolgt die Kontrolle der Molmasse über das Verhältnis von Monomer- zu Initiatormenge. Initiator kann aber auch mehrfach nach bereits erfolgter Monomerdosierung zugegeben werden, dann erhält man eine bi- oder multimodale Verteilung. Bei radikalisch hergestellten Polymeren wird das gewichtsmittlere Molekulargewicht MW über die Polymerisationstemperatur und/oder den Zusatz von Reglern eingestellt.

Die Glasübergangstemperatur des Copolymerblocks (S/B)A liegt bevorzugt im Bereich von 5 bis 20°C. Die Glasübergangstemperatur wird durch die Comonomer-Zusammensetzung und -Verteilung beeinflusst und kann durch Differential Scanning Calorimetrie (DSC) oder Differential Thermal Analysis (DTA) bestimmt oder gemäß der Fox-Gleichung berechnet werden. In der Regel wird die Glasübergangstemperatur mit DSC nach ISO 11357-2 bei einer Aufheizrate von 20K/min ermittelt.

Bevorzugt besteht der Copolymerblock (S/B)A aus 65 bis 75 Gew.-% Styrol und 25 bis 35 Gew.-% Butadien.

Bevorzugt werden Blockcopolymere, welche ein oder mehrere Copolymerblöcke (S/B)A aus vinylaromatischen Monomeren und Dienen mit statistischer Verteilung enthalten. Diese können beispielsweise durch anionische Polymerisation mit Lithiumalkylen in Gegenwart von Randomizern wie Tetrahydrofuran oder Kaliumsalzen erhalten werden. Bevorzugt werden Kaliumsalze mit einem Verhältnis von anionischem Initiator zu Kaliumsalz im Bereich von 25:1 bis 60:1 verwendet. Besonders bevorzugt sind cyclohexanlösliche Alkoholate wie Kaliumtertiärbutylamylat, die in enem Lithium-Kalium-Verhältnis von bevorzugt 30:1 bis 40:1 eingesetzt werden. Dadurch kann gleichzeitig ein niedriger Anteil an 1,2-Verknüpfungen der Butadieneinheiten erreicht werden.

Bevorzugt liegt der Anteil der 1,2-Verknüpfungen der Butadieneinheiten im Bereich von 8 bis 15%, bezogen auf die Summe der 1,2-, 1,4-cis- und 1,4-trans-Verknüpfungen.

Die gewichtsmittlere Molmasse Mw des Copolymerblocks (S/B)A liegt in der Regel im Bereich von 30.000 bis 200.000 g/mol, bevorzugt im Bereich von 50.000 bis 100.000 g/mol.

Statistische Copolymere (S/B)A können aber auch durch radikalische Polymerisation hergestellt werden.

Die Blöcke (S/B)_{A} bilden in der Formmasse bei Zimmertemperatur (23°C) eine halbharte Phase aus, welche für die hohe Duktilität und Reißdehnungen, d.h. hohe Dehnung bei geringer Dehngeschwindigkeit, verantwortlich sind.

Die Blockcopolymere können zusätzlich c) einen Copolymerblock (S/B)_{B} aus 20 bis 60 Gew.-% vinylaromatischen Monomeren und 40 bis 80 Gew.-% Dienen mit einer Glasübergangstemperatur Tg_{B} im Bereich von 0 bis -110°C, enthalten.

Die Glasübergangstemperatur des Copolymerblocks (S/B)_{B} liegt bevorzugt im Bereich von -60 bis -20°C. Die Glasübergangstemperatur wird durch die Comonomer-Zusammensetzung und -Verteilung beeinflusst und kann durch Differential Scanning Calorimetrie (DSC) oder Differential Thermal Analysis (DTA) bestimmt oder gemäß der Fox-Gleichung berechnet werden. In der Regel wird die Glasübergangstemperatur mit DSC nach ISO 11357-2 bei einer Aufheizrate von 20K/min ermittelt.

Bevorzugt besteht der Copolymerblock (S/B)_{B} aus 30 bis 50 Gew.-% Styrol und 50 bis 70 Gew.-% Butadien.

Bevorzugt werden Blockcopolymere , welche einen Copolymerblock (S/B)B aus vinylaromatischen Monomeren und Dienen mit statistischer Verteilung enthalten. Diese können beispielsweise durch anionische Polymerisation mit Lithiumalkylen in Gegenwart von Randomizern wie Tetrahydrofuran oder Kaliumsalzen erhalten werden. Bevorzugt werden Kaliumsalze mit einem Verhältnis von anionischem Initiator zu Kaliumsalz im Bereich von 25:1 bis 60:1 verwendet. Dadurch kann gleichzeitig ein niedriger Anteil an 1,2-Verknüpfungen der Butadieneinheiten erreicht werden.

Bevorzugt liegt der Anteil der 1,2-Verknüpfungen der Butadieneinheiten im Bereich von 8 bis 15%, bezogen auf die Summe der 1,2-, 1,4-cis- und 1,4-trans-Verknüpfungen. Statistische Copolymere (S/B)B können aber auch durch radikalische Polymerisation hergestellt werden.

Die eine Weichphase bildenden Blöcke B und/oder (S/B)B können über ihre gesamte Länge einheitlich oder in unterschiedlich zusammengesetzte Abschnitte aufgeteilt sein. Bevorzugt sind Abschnitte mit Dien (B) und (S/B)B, die in unterschiedlichen Abfolgen kombiniert werden können. Möglich sind Gradienten mit sind kontinuierlich änderndem Monomerverhältnis, wobei der Gradient mit reinem Dien oder einem hohen Dienanteil beginnen kann und der Styrolanteil bis 60% ansteigen kann. Auch die Abfolge von zwei oder mehreren Gradientenabschnitten ist möglich. Gradienten können durch Unter- oder Überdosierung des Randomizers erzeugt werden. Bevorzugt ist die Einstellung eines Lithium-Kalium-Verhältnisses von größer als 40:1 oder bei Verwendung von Tetrahydrofuran (THF) als Randomizer eine THF-Menge von weniger als 0,25 Vol-% bezogen auf das Polymerisationslösungsmittel. eine Alternative ist die bezogen auf die Polymerisationsgeschwindigkeit langsame, gleichzeitige Dosierung von Dien und Vinylaromat, wobei das Monomerverhältnis entsprechend dem angestrebten Zusammensetzungsprofil entlang des Weichblocks gesteuert wird.

Die gewichtsmittlere Molmasse Mw des Copolymerblocks (S/B)B liegt in der Regel im Bereich von 50.000 bis 100.000 g/mol, bevorzugt im Bereich von 10.000 bis 70.000 g/mol.

Der Gewichtsanteil der Summe aller Blöcke S liegt im Bereich von 50 bis 70 Gew.-%, und der Gewichtsanteil der Summe aller Blöcke (S/B)_{A} und (S/B)_{B} im Bereich von 30 bis 50 Gew.-%, jeweils bezogen auf das Block- oder Pfropfcopolymer.

Die Blöcke (S/B)_{A} und (S/B)_{B} sind durch einen Block S voneinander getrennt.

Das Gewichtsverhältnis der Copolymerblöcke (S/B)_{A} zu den Copolymerblöcken (S/B)_{B} liegt bevorzugt im Bereich von 80 : 20 bis 50 : 50.

Die Blockcopolymere sind linearer Struktur, mit der Blockfolge
S₁-(S/B)_{A}-S₂-(S/B)_{B}-S₃ oder
S₁-(S/B)_{A}-S₂-(S/B)_{A}-S₃ (Pentablockcopolymere),
wobei S1 und S₂ jeweils für einen Block S stehen.

Diese zeichnen sich durch einen hohem E-Modul von1500 bis 2000 MPa, eine hohe Streckspannung im Bereich von 35 bis 42 MPa und einer Bruchdehnung von über 30 % in Mischungen mit einem Polystyrolanteil von über 80 Gew.-%. Kommerzielle SBS-Blockcopolymere mit diesem Polystyrolanteil zeigen zum Vergleich eine Bruchdehnung von nur 3-30 %.

Bevorzugt werden Pentablockcopolymere der Struktur S₁-(S/B)_{A}-S₂-(S/B)_{A}-S₃, welche einen Block (S/B)_{A} aus 70 bis 75 Gew.-% Styroleinheiten und 25 bis 30 Gew.-% Butadieneinheiten enthalten. Die Glasübergangstemperaturen können mit DSC bestimmt oder nach der Gordon-Taylor-Gleichung berechnet werden und liegen bei dieser Zusammensetzung im Bereich von 1 bis 10°C. Der Gewichtsanteil der Summe der Blöcke S1 und S2, bezogen auf das Pentablockcopolymer, beträgt bevorzugt 50 bis 67 Gew.-%. Das Gesamtmolekulargewicht liegt vorzugsweise im Bereich von 260.000 bis 350.000 g/mol. Bedingt durch die molekulare Architektur können hier Bruchdehnungen von bis zu 300% bei einem Styrolanteil von über 85% erreicht werden.

Blockcopolymere, welche aus den Blöcken S, (S/B)_{A} und (S/B)_{B} aufgebaut sind, beispielsweise Pentablockcopolymere der Struktur S₁(S/B)_{A}-S₂-(S/B)_{B}-S₃ bilden eine Cokontinuierliche Morphologie aus. Hier sind drei verschiedene Phasen in einem Polymermolekül vereint. Die aus den (S/B)_{B}-Blöcken gebildete Weichphase vermittelt in der Formmasse die Schlagzähigkeit und eignet sich zum Abfangen von Rissbildungen (Crazes). Die aus den Blöcken (S/B)_{A} gebildete halbharte Phase ist für die hohe Duktilität und Reißdehnungen verantwortlich. Über den Anteil der aus den Blöcken S und gegebenenfalls zugemischtem Polystyrol gebildeten Hartphase kann der E-Modul und die Streckspannung eingestellt werden.

Die erfindungsgemäßen Blockcopolymeren bilden in der Regel mit Standardpolystyrol nanodisperse, mehrphasige hochtransparente Mischungen aus.

Das erfindungsgemäße Blockcopolymer eignet sich als Komponente K1) in transparenten, zäh-steifen Formmassen mit Polystyrol als Komponente K2) und ggf. mit einen von K1 verschiedenen-Blockcopolymeren K3).

Eine bevorzugte Mischung besteht aus den Komponenten
K1) 20 bis 95 Gew.-% eines Blockcopolymeren A nach einem der Ansprüche 1 bis 4, und
K2) 5 bis 80 Gew.-% Standardpolystyrol (GPPS) oder Schlagzähpolystyrol (HIPS), und
K3) 0 bis 50 Gew.-%, bevorzugt 10 bis 30 Gew.-% eines von K1 verschiedenen Blockcopolymeren B aus vinylaromatischen Monomeren und Dienen.

In Formmassen mit dieser Mischung bildet der Block mit einer Glasübergangstemperatur unter -30°C der Komponenten K3) die Weichphase und die Hartphase wird aus mindestens zwei verschiedenen Domänen gebildet, welche aus Polystyrol bzw. einem Polystyrolblock und dem Block (S/B)_{A} des Blockcopolymeren der Komponente K1) bestehen.

### Komponente K1)

Als Komponente K1) wird das oben beschriebene, erfindungsgemäße Blockcopolymer eingesetzt.

### Komponente K2)

Als Komponente K2) wird en Styrolpolymer, vorzugsweise Standardpolystyrol (GPPS) oder Schlagzähpolystyrol (HIPS) eingesetzt. Besonders bevorzugt ist wegen des Erhalts der Transparenz Standardpolystyrol als ölfreie oder ölhaltige Variante. Geeignete Standardpolystyrole sind beispielsweise Polystyrol 158 K und Polystyrol 168 N von BASF SE bzw. deren ölhaltige Varianten Polystyrol 143 E oder Polystyrol 165 H. Bevorzugt werden 10 bis 70 Gew.-%, besonders bevorzugt 20 bis 40 Gew.-% höhermolekulare Polystyrole mit einem gewichtsmittleren Molekulargewicht M_{w} im Bereich von 220.000 bis 500.000 g/mol eingesetzt.

### Komponente K3)

Als Komponente K3) kann ein von K1) verschiedenes Blockcopolymer aus vinylaromatischen Monomern und Dienen eingesetzt werden. Bevorzugt wird als Komponente K3) ein Styrol-Butadien-Blockcopolymeren, welches einen als Weichblock wirkenden Block B mit einer Glasübergangstemperatur unter -30°C aufweist, eingesetzt.

Die Mischung enthält als Komponente K3) bevorzugt ein Blockcopolymer, welches
a) mindestens einen Block S aus 95 bis 100 Gew.-% vinylaromatischen Monomeren und 0 bis 5 Gew.-% Dienen und
b) mindestens einen Copolymerblock (S/B)_{B} aus 20 bis 60 Gew.-% vinylaromatischen Monomeren und 40 bis 80 Gew.-% Dienen mit einer Glasübergangstemperatur Tg_{B} im Bereich von 0 bis -80°C, bevorzugt im Bereich von - 65°C bis -20°C enthält,

Die erfindungsgemäßen Block- oder Pfropfcopolymeren bilden in der Regel mit Standardpolystyrol nanodisperse, mehrphasige hochtransparente Mischungen aus. wobei der Gewichtsanteil der Summe aller Blöcke S im Bereich von 25 bis 70 Gew.-%, und der Gewichtsanteil der Summe aller Blöcke (S/B)_{B} im Bereich von 30 bis 75 Gew.-%, jeweils bezogen auf das Blockcopolymer B, liegt.

Ebenfalls bevorzugt als Komponente K3) ist ein Blockcopolymer, welches
a) mindestens einen Block S aus 95 bis 100 Gew.-% vinylaromatischen Monomeren und 0 bis 5 Gew.-% Dienen und
b) mindestens einen Homopolydien (B) oder Copolymerblock (S/B)_{B} aus 0 bis 60 Gew.-% vinylaromatischen Monomeren und 40 bis 100 Gew.-% Dienen mit einer Glasübergangstemperatur Tg_{B} im Bereich von 0 bis -110°C, bevorzugt im Bereich von -70 bis -110°C enthält,
wobei der Gewichtsanteil der Summe aller Blöcke S im Bereich von 25 bis 90 Gew.-%, bevorzugt im Bereich von 65 bis 85 Gew.-% und der Gewichtsanteil der Summe aller Blöcke (S/B)_{B} im Bereich von 10 bis 75 Gew.-%, bevorzugt im Bereich von 15 bis 35 Gew.-%, jeweils bezogen auf das Blockcopolymer, liegt.

Die erfindungsgemäße Mischung enthält bevorzugt 5 bis 45 Gew.-%, besonders bevorzugt 20 bis 40 Gew.-% des Blockcopolymeren K3.

Als Blockcopolymere K3) eignen sich insbesondere steife Blockcopolymere, welche aus 60 bis 90 Gew.-% vinylaromatischen Monomeren und 10 bis 40 Gew.-% Dien, bezogen auf das gesamte Blockcopolymer, bestehen und aus überwiegend vinylaromatischen Monomeren, insbesondere Styrol enthaltenden Hartblöcken S und Diene, wie Butadien und Isopren enthaltenden Weichblöcken B oder S/B aufgebaut sind. Besonders bevorzugt sind Blockcopolymere mit 65 bis 85 Gew.-%, besonders bevorzugt 70-80 Gew.-% Styrol und 15 bis 35 Gew.-%, besonders bevorzugt 20-30 Gew.-% Dien.

Die Copolymerblöcke (S/B)B des Blockcopolymeren K3) weisen bevorzugt eine statistische Verteilung der vinylaromatischen Monomeren und Dienen auf.

Ebenfalls möglich sind Blöcke mit verschmierten Übergängen oder einem Gradienten von einem höheren zu einem niedrigeren Dien/Vinylaromat-Verhältnis.

Bevorzugte Blockcopolymere K3) weisen eine sternförmige Struktur mit mindestens zwei endständigen Hartblöcke S₁ und S₂ mit unterschiedlichem Molekulargewicht aus vinylaromatischen Monomeren auf, wobei der Anteil der Summe der Hartblöcke S mindestens 40 Gew.-%, bezogen auf das gesamte Blockcopolymer B beträgt. Möglich sind auch lineare Strukturen, wie (S/B)_{B}-S₂ oder S₁S/B)_{B}-S₂ oder S₁-(B->S)ₙ

Bevorzugt weisen die endständigen Blöcke S₁ eine zahlenmittlere Molmasse Mₙ im Bereich von 5.000 bis 30.000 g/mol und S₂ eine zahlenmittleren Molmasse Mₙ im Bereich von 35.000 bis 150.000 g/mol auf.

Bevorzugt sind polymodale Styrol-Butadien-Blockcopolymere mit endständigen Styrolblöcken, wie sie beispielsweise in DE-A 25 50 227 oder EP-A 0 654 488 beschrieben sind.

Besonders bevorzugt werden Blockcopolymere K3) mit mindestens zwei Blöcken S1 und S2 aus vinylaromatischen Monomeren und mindestens einem dazwischenliegenden, statistischen Block (S/B)B aus vinylaromatischen Monomeren und Dienen, wobei der Anteil der Hartblöcke über 40 Gew.-%, bezogen auf das gesamte Blockcopolymer beträgt und der 1,2-Vinylgehalt im Weichblock S/B unter 20 % beträgt, wie sie in WO 00/58380 beschrieben sind.

Die Blockcopolymeren K3) sind im Handel beispielsweise unter den Handelsbezeichnungen Styrolux® 3G 33/Styroclear® GH 62, Styrolux® 693 D, Styrolux® 684, Styrolux® 656 C, Styrolux® 3G55, K-Resin® 03, K-Resin® 04, K-Resin® 05, K-Resin® 10, K-Resin® KK38, K-Resin® 01, K-Resin® XK 40, Kraton® D 1401P , Finaclear 520, 530, 540, 550; Asaflex® 805, 810, 825, 835, 840, 845 Asaflex® i-Serie, Clearen® 530 L und 730 L erhältlich.

### Plastifizierungsmittel

Als Plastifizierungsmittel E können 0 bis 6 Gew.-%, bevorzugt 2 bis 4 Gew.-% eines homogen mischbaren Öls oder Ölgemisches, insbesondere Weißöl, Pflanzenöle oder aliphatische Ester wie Dioktyl-Adipat oder deren Mischungen verwendet werden. Bevorzugt wird medizinisches Weißöl eingesetzt.

Die erfindungsgemäßen Mischungen sind hoch transparent und eignen sich insbesondere zur Herstellung von Folien, insbesondere von Tiefziehfolien für Blisterverpackungen und Behältnissen oder Formteilen für die Verpackung von elektronischen Bauteilen, insbesondere extrudierte Hohlprofile für Integrierte Schaltkreise (IC). Weiter eignen sie sich für die Herstellung zäh-steifer Spritzlinge.

### Beispiele:

### Prüfmethoden:

Die Glasübergangstemperaturen wurden mit Differential Scanning Calorimetrie (DSC) nach ISO 11357-2 bei einer Aufheizrate von 20K/min bestimmt

Die Molekulargewichte wurden mit Gelpermeationschromatographie (GPC) in Tetrahydrofuran (THF) bei 23 °C mittels UV-Detektion bestimmt und mit Polystyrol als Standard ausgewertet.

E-Modul, Streckspannung und Reißdehnung wurden nach ISO 527 bestimmt.

### Blockcopolymere K1-1 bis K1-7

Zur Herstellung der linearen Styrol-Butadien-Blockcopolymeren A wurden in einem doppelwandigen 10 Liter Edelstahl-Rührautoklaven mit einem Kreuzbalkenrührer 5385 ml Cyclohexan vorgelegt, bei 60°C mit 1,6 ml sec-Butyllithium (BuLi) bis zum Auftreten einer durch 1,1-Diphenylethylen als Indikator hervorgerufenen Gelbfärbung austitriert und anschließend mit 3,33 ml einer 1,4 M sec.-Butyl-Lithium-Lösung zur Initiierung und 0,55 ml einer 0,282 M Kalium-tert.-Amylat (KTA)-Lösung als Randomizer versetzt. Anschließend wurde die zur Herstellung des ersten S-Blockes benötigte Menge Styrol (280 g Styrol 1) zugegeben und auspolymerisiert. Die weiteren Blöcke wurden entsprechend der in Tabelle 1 angegebenen Struktur und Zusammensetzung durch sequentielle Zugabe der entsprechenden Mengen Styrol bzw. Styrol und Butadien und jeweiligen vollständigen Umsatz angefügt. Zur Herstellung der Copolymerblöcke wurden Styrol und Butadien gleichzeitig in mehreren Portionen zugegeben und die Maximaltemperatur durch Gegenkühlen auf 77°C begrenzt. Für Blockcopolymer K1-3 wurden hierfür 84 g Butadien 1 und 196 g Styrol 2 für den Block (S/B)A, 280 g Styrol 3 für den Block S2, 84 g Butadien B2 und 196 g Styrol 4 für den Block (S/B)A und 280 g Styrol 5 für den Block S1

Danach wurden die lebenden Polymerketten durch Zugabe von 0,83 ml Isopropanol terminiert, mit 1,0% CO2/0,5% Wasser, bezogen auf Feststoff angesäuert und eine Stabilisatorlösung (0,2% Sumilizer GS und 0,2% Irganox 1010, jeweils bezogen auf Feststoff) zugegeben. Das Cyclohexan wurde im Vakuumtrockenschrank abgedampft.

Das gewichtsmittlere Molekulargewicht Mw für die Blockcopolymeren K1-1 bis K1-7 beträgt jeweils 300.000 g/mol.

Analog Blockcopolymere K1-3 wurden weitere Blockcopolymere mit der Struktur S₁-(S/B)_{A}-S₂-(S/B)_{A}-S₁ hergestellt, wobei das Molekulargewicht durch unterschiedliche Initiatormengen variiert wurde.

### Blockcopolymer K1-3a:

Struktur S₁-(S/B)_{A}-S₂-(S/B)_{A}-S₁. (20-20-20-20-20 Gew.-%), gewichtsmittleres Molekulargewcht 220.000 g/mol

### Blockcopolymer K1-3b:

Struktur S₁-(S/B)_{A}-S₂-(S/B)_{A}-S₁. (20-20-20-20-20 Gew.-%), gewichtsmittleres Molekulargewcht 200.000 g/mol
Das DSC-Diagramm des Blockcopolymeren zeigte zwei breite (± 20°C) Glasübergangstemperaturen bei +20°C und 70°C.

### Sternförmiges Blockcopolymer K1-8 (nicht erfindungsgemäß)

Zur Herstellung eines sternförmigen Styrol-Butadien-Blockcopolymeren mit der Struktur S₁-(S/B)_{A}-S₂-X(S₃)₂-S₂-(S/B)_{A}-S₁ wurden 5385 ml Cyclohexan vorgelegt, bei 60°C mit 1,6 ml einer 1,4M sec-Butyllithium (s-BuLi) austitriert und anschließend mit 4,91 ml einer 1,4 M sec.-Butyl-Lithium-Lösung zur Initiierung und 0,27 ml einer 0,847M Kaliumtert.-Amylat (KTA)-Lösung als Randomizer versetzt und auf 61°C temperiert. Anschließend wurde die zur Herstellung der Blöcke S1 benötigte Menge Styrol (560 g) zugegeben und bis zum vollständigem Umsatz polymerisiert. Zur Herstellung der Copolymerblöcke (S/B)A wurden insgesamt 168 g Butadien und 392 g Styrol gleichzeitig in mehreren Portionen zugegeben und die Maximaltemperatur durch Gegenkühlen auf 73°C begrenzt. Danach wurden 3,28 ml s-BuLi und 280 g Styrol zur Bildung der Blöcke S2 und S3 zugegeben und bis zum vollständigen Umsatz polymerisiert.

Danach wurden die lebenden Polymerketten mit 1,79 ml epoxidiertes Sojabohnenöl ( Dehysol D82) gekoppelt, 0,83 ml Isopropanol zugegeben und mit 1,0% CO2/0,5 % Wasser, bezogen auf Feststoff angesäuert und eine Stabilisatorlösung (0,2 % Sumilizer GS und 0,2 % Irganox 1010, jeweils bezogen auf Feststoff) zugegeben. Das Cyclohexan wurde im Vakuumtrockenschrank eingedampft.

Das gewichtsmittlere Molekulargewicht Mw betrug 293.850 g/mol. Das DSC-Diagramm des Blockcopolymeren zeigte zwei breite (± 20°C) Glasübergangstemperaturen bei + 10°C und + 75°C.

### Komponente K2

Als Komponente K2-1 wurde Standardpolystyrol PS 158 K mit einem Mw von 270.000 g/mol der BASF SE eingesetzt.

Als Komponente K2-2 wurde Standardpolystyrol PS 165 H (BASF SE) mit einem Mw von 300.000 g/mol und einem Weisölanteil (medizinisches Weißöl mit einer Viskosität von 70 Centi-stokes bei 40°C) von 3,5 Gew.-% eingesetzt

Als Komponente K2-3 wurde Standardpolystyrol PS 143 E mit einem Mw von 270.000 g/mol und einem Weißölanteil von 5 Gew.-% der BASF SE eingesetzt.

### Blockcopolymer K3

### Blockcopolymer K3-1:

Ein sternförmiges Blockcopolymer K3-1 (26 Gew.-% Butadien, 74 Gew.-% Styrol) mit statistischen Copolymerblöcken S/B wurde durch sequentielle anionische Polymerisation von Styrol und Butadien und anschließende Kopplung mit epoxidiertem Leinöl entsprechend Beispiel 17 aus WO 00/58380 hergestellt.

Blockcopolymer K3-2: Styroflex 2G66, Styrol-Butadienblockcopolymer

### Mischungen M 1 bis M 19

Die in den Tabellen 2 bis 6 angegebenen Gewichtsteile der Blockcopolymeren K1 sowie der Komponenten K2 (Polystyrol PS 158 K bzw. 165 H) und K3 auf einem 16 mm-Zweischneckenextruder bei 200 bis 230°C gemischt und über eine Breitschlitzdüse zu einer 1 mm dicken Folie extrudiert oder zu Platten gepresst. Die Mischungsverhältnisse und mechanischen bzw. optischen Eigenschaften der Folien sind in Tabelle 2 bis 6 zusammengestellt. Sofern nicht anders angegeben wurde die in der Kopfzeile angegebene Komponente eingesetzt.

**Tabelle 1: Struktur und Zusammensetzung der Blockcopolymeren in Gewichtsanteilen**

| Beispiel | S₁ | (S/B)_{A} | S₂ | (S/B)_{B} | (S/B)_{A} | S₃ | S:B in (S/B)_{A} | S:B in (S/B)_{B} | Gesamtstyrolgehalt [Gew.-%] |
|---|---|---|---|---|---|---|---|---|---|
| K1-1 * | 32,5 | 35 | 32,5 | | | | 70:30 | | 89,5 |
| K1-2 * | 30 | 40 | 30 | | | | 75:25 | | 88 |
| K1-4 | 20 | 30 | 20 | 10 | | 20 | 70:30 | 50:50 | 86 |
| K1-5 | 25 | 20 | 25 | 5 | | 25 | 70:30 | 30:70 | 91,5 |
| K1-6 | 26,66 | 10 | 26,66 | 10 | | 26,66 | 70:30 | 70:30 | 94 |
| K1-7 | 26,66 | 10 | 26,66 | 10 | | 26,66 | 70:30 | 50:50 | 92 |

| | | | | | | | | | |
|---|---|---|---|---|---|---|---|---|---|
| * nicht erfindungsgemäß | | | | | | | | | |

**Tabelle 2: Eigenschaften von Pressplatten**

| Mischung | K1-3a | K1-4 | K2-1 (PS 158K) | E-Modul [N/mm²] | Streckspannung [N/mm²] | Reißdehnung [%] |
|---|---|---|---|---|---|---|
| M1 | 90 | - - - - - | 10 | 1406 | 38,4 | 58,5 |
| M2 | 80 | - - - - - | 20 | 1547 | 40,1 | 49,8 |
| M3 | 70 | - - - - - | 30 | 1812 | 43,3 | 13,1 |
| M4 | 60 | - - - - - | 40 | 1906 | 45,6 | 7,5 |
| M5 | - - - - - | 90 | 10 | 1404 | --- | 58,4 |
| M6 | - - - - - | 80 | 20 | 1618 | 40,7 | 30,1 |
| M7 | - - - - - | 70 | 30 | 1737 | 42,5 | 19,1 |
| M8 | - - - - - | 60 | 40 | 1903 | 45,4 | 3,5 |

**Tabelle 3: Eigenschaften der extrudierten, 1mm dicken Folien der Mischungen M1 bis M6**

| | K1-3a | K2-2 | K3 | E-Modul [MPa] | | Bruchspannung [MPa] | | Bruchdehnung [%] | | Opt. Eigenschaften | |
|---|---|---|---|---|---|---|---|---|---|---|---|
| | | (PS165H) | | parallel | senkr. | parallel | senkr. | parallel | senkr. | Transp. [%] | haze [%] |
| M9 | 55 | 30 | 15 | 2139 | 1659 | 47,3 | 35,8 | 5,3 | 2,4 | 87,77 | 2,94 |
| M10 | 50 | 35 | 15 | 2168 | 1890 | 46,7 | 37,9 | 6,3 | 2,3 | 87,72 | 2,72 |
| M11 | 25 | 50 | 25 | 2253 | 1738 | 44,1 | 33,8 | 23,7 | 3,2 | 85,67 | 3,57 |
| M12 | 30 | 50 | 20 | 2278 | 1742 | 44,3 | 35,7 | 11,3 | 3,2 | 86,47 | 3,19 |
| M13 | 35 | 50 | 15 | 2342 | 2032 | 46,3 | 37,7 | 7,4 | 2,5 | 87,12 | 3,25 |

**Tabelle 4: Eigenschaften der extrudierten, 1mm dicken Folien der Mischungen**

| | K1-3b [Gew.-%] | K2 [Gew.-%] | K3 [Gew.-%] | E-Modul [MPa] | | Bruchspannung [MPa] | | Bruchdehnung [%] | | Opt. Eigenschaften | |
|---|---|---|---|---|---|---|---|---|---|---|---|
| | | (PS165H) | Styrolux BX 6400 | parallel | senkr. | parallel | senkr. | parallel | senkr. | Transp. [%] | haze [%] |
| M14 | 50 | 30 | 20 | 2146 | 1978 | 41,4 | 38,9 | 8,8 | 8,7 | 85,4 | 7,37 |
| M15 | 45 | 30 | 25 | 2093 | 1865 | 40,2 | 36,4 | 29,8 | 27,4 | 84,17 | 7,87 |
| M16 | 40 | 30 | 30 | 2045 | 1792 | 39,3 | 34,4 | 29,8 | 27,8 | 84,82 | 8,38 |
| M17 | 25 | 50 | 25 | 2317 | 1951 | 41,4 | 35 | 35,1 | 37,7 | 83,05 | 9,03 |
| M18 | 25 | 45 | 30 | 2350 | 2010 | 40,3 | 35,5 | 37,4 | 36,5 | 83,7 | 8,48 |
| M19 | 30 | 45 | 25 | 2344 | 2044 | 42,9 | 37,2 | 5,6 | 5,0 | | 7,6 |
| M20 | 35 | 40 | 25 | 2321 | 2098 | 42,9 | 38,7 | 5,0 | 4,2 | | 8,1 |
| M21 | 40 | 35 | 25 | 2236 | 2031 | 42,8 | 38,6 | 4,7 | 4,2 | | 7,5 |
| M22 | 45 | 30 | 25 | 2150 | 1968 | 42,1 | 38,42 | 4,0 | 4,14 | | 6,7 |
| M23 | 40 | 35 PS 158K | 25 | 2330 | 2116 | 46,1 | 41,15 | 3,0 | 3,21 | | 4,1 |
| M24 | 40 | 35 PS 143E | 25 | 2259 | 2011 | 41,9 | 38,08 | 3,7 | 3,56 | | 6,8 |
| M25 | 35 | 15 PS 158K 22,5 PS 143 E | 27,5 | 2267 | 1958 | 43,4 | 37,56 | 3,8 | 5,27 | | 5,4 |
| M26 | 30 | 40 | 30 | 2301 | 1920 | 43,3 | 35,95 | 9,8 | 8,48 | | 8,7 |
| M27 | 40 | 30 | 30 | 2122 | 1818 | 42 | 36,2 | 6,54 | 6,99 | | 7,6 |
| V1 | - | 60 | 40 | 2232 | 1565 | 34,25 | 24,31 | 47,74 | 43,34 | | 18,4 |
| V2 | - | 70 | 30 | 2488 | 1950 | 39,91 | 29,27 | 27,57 | 12,34 | | 14,3 |
| M28 | 100 | - | - | 2218 | 2203 | 44,55 | --- | 2,7 | --- | | 1,5 |
| M29 | 40 | 25 PS 158K | 35 | 2166 | 1834 | 46,53 | 37,7 | 59 | 37 | | 4,4 |
| M30 | 70 | | 30 | 1767 | 1646 | 40,87 | 38,24 | 4,54 | 3,44 | | 2,9 |

**Tabelle 5: Eigenschaften der extrudierten, 1mm dicken Folien der Mischungen**

| | K1-3b [Gew.-%] | K2-2 [Gew.-%] | K3-1 [Gew.-%] | E-Modul [MPa] | | Bruchspannung [MPa] | | Bruchdehnung [%] | | Opt. Eigenschaften | |
|---|---|---|---|---|---|---|---|---|---|---|---|
| | | (PS165H) | | parallel | senkr. | parallel | senkr. | parallel | senkr. | Transp. [%] | haze [%] |
| M31 | 30 | 50 | 20 | 2346 | 2102 | 42,2 | 37,3 | 17,8 | 9,8 | 83,1 | 6,0 |
| M32 | 40 | 40 | 20 | 2267 | 1818 | 41,6 | 37,2 | 12,2 | 7,5 | 83,6 | 6,2 |
| M33 | 50 | 30 | 20 | 2295 | 1945 | 47 | 36,5 | 31,0 | 2,5 | 85,3 | 4,6 |
| M34 | 25 | 50 | 25 | 2425 | 1891 | 46,5 | 33,1 | 53,0 | 3,1 | 85,8 | 8,5 |
| M35 | 35 | 40 | 25 | 2323 | 1902 | 46,6 | 35,6 | 56,7 | 3,0 | 85,1 | 7,9 |
| M36 | 45 | 30 | 25 | 2206 | 1732 | 46,3 | 35,1 | 46,8 | 3,6 | 85,9 | 7,1 |
| M37 | 76 | 19 | 5 K3-2 | 2089 | 1847 | 38,4 | 36,5 | 2,8 | 2,1 | 86,0 | 3,6 |
| M38 | 72 | 18 | 10 K3-2 | 2014 | 1657 | 38,1 | 35,2 | 4,3 | 11,1 | 83,6 | 7,6 |
| M39 | 33,25 | 38 | 5 K3-2 23,75 | 2026 | 1640 | 36,2 | 29,1 | 13,5 | 43,2 | 81,2 | 9,2 |
| M40 | 31,5 | 36 | 10 K3-2 22,5 | 1824 | 1338 | 29,9 | 24,5 | 73,6 | 174,0 | 80,6 | 11,4 |

**Tabelle 6: Eigenschaften der extrudierten, 1mm dicken Folien der Mischungen**

| | K1 [Gew.-%] | Mw [kg/mol] | K2-2 [Gew.-%] | K3-1 [Gew.-%] | E-Modul [MPa] | | Bruchspannung [MPa] | | Bruchdehnung [%] | | Opt. Eigenschaften | |
|---|---|---|---|---|---|---|---|---|---|---|---|---|
| | K1-3 | | (PS165H) | | parallel | senkr. | parallel | senkr. | parallel | senkr. | Transp. [%] | haze [%] |
| M41 | 45 | 200 | 30 | 25 | 2154 | 1935 | 35,86 | 35,8 | 3,4 | 16,7 | 83,57 | 5,05 |
| M42 | 45 | 210 | 30 | 25 | 2094 | 1944 | 36,33 | 37,8 | 3,5 | 11,4 | 84,93 | 2,78 |
| M43 | 45 | 245 | 30 | 25 | 2056 | 1881 | 35,47 | 35,57 | 7,1 | 15,3 | 85,62 | 2,01 |
| M44 | 45 | 314 | 30 | 25 | 2012 | 1970 | 35,6 | 36,8 | 3 | 5,9 | 87,79 | 3,16 |
| | | | | | | | | | | | | |
| M45 | 45 K1-8a * | 170 | 30 | 25 | 2042 | 1955 | 37,7 | 37,62 | 2,4 | 4,9 | 85,48 | 3,51 |
| M 46 | 45 K1-8b * | 190 | 30 | 25 | 2088 | 1992 | 36,29 | 37,56 | 3,3 | 7,4 | 86,13 | 4,25 |
| M 47 | 45 K1-8c * | 289 | 30 | 25 | 2004 | 1738 | 37,25 | 36,18 | 4,4 | 26,4 | 87,34 | 1,65 |
| | | | | | | | | | | | | |
| M48 | 42 K1-8c * | 289 | 30 | 28 | 1948 | 1673 | 36,17 | 34,26 | 5,5 | 32,5 | 87,6 | 1,48 |
| M49 | 42 K1-8c * | 289 | 30 | 28 | 1995 | 1626 | 34,91 | 31,59 | 6 | 39,3 | 85,38 | 3,46 |
| M50 | 45 K1-8c * | 289 | 30 | 25 | 2012 | 1740 | 37,1 | 34,06 | 6,2 | 21,7 | 86,82 | 2,34 |

| | | | | | | | | | | | | |
|---|---|---|---|---|---|---|---|---|---|---|---|---|
| * nicht erfindungsgemäß | | | | | | | | | | | | |

## Patentansprüche

1. Blockcopolymer A mit einem gewichtsmittleren Molekulargewicht M_{w} von mindestens 100,000 g/mol, enthaltend
a) mindestens einen Block S aus 95 bis 100 Gew.-% vinylaromatischen Monomeren und 0 bis 5 Gew.-% Dienen und
b) mindestens einen Copolymerblock (S/B)_{A} aus 63 bis 80 Gew.-% vinylaromatischen Monomeren und 20 bis 37 Gew.-% Dienen mit einer Glasübergangstemperatur Tg_{A} im Bereich von 5 bis 30°C, wobei
der Gewichtsanteil der Summe aller Blöcke S im Bereich von 50 bis 70 Gew.-%, bezogen auf das Blockcopolymer A, liegt, und das Blockcopolymer A eine lineare Struktur mit der Blockfolge S₁-(S/B)_{A}-S₂-(S/B)_{A}-S₃ aufweist, wobei S₁, S₂ und S₃ jeweils für einen Block S stehen.

2. Blockcopolymer A mit einem gewichtsmittleren Molekulargewicht M_{w} von mindestens 100.000 g/mol, enthaltend
a) mindestens einen Block S aus 95 bis 100 Gew.-% vinylaromatischen Monomeren und 0 bis 5 Gew.-% Dienen und
b) einen Copolymerblock (S/B)_{A} aus 63 bis 80 Gew.-% vinylaromatischen Monomeren und 20 bis 37 Gew.-% Dienen mit einer Glasübergangstemperatur Tg_{A} im Bereich von 5 bis 30°C, und
c) einen Copolymerblock (S/B)_{B} aus 20 bis 60 Gew.-% vinylaromatischen Monomeren und 40 bis 80 Gew.-% Dienen mit einer Glasübergangstemperatur Tg_{B} im Bereich von 0 bis -110°C, enthält,
wobei der Gewichtsanteil der Summe aller Blöcke S im Bereich von 50 bis 70 Gew.-%, und der Gewichtsanteil der Summe aller Blöcke (S/B)_{A} und (S/B)_{B} im Bereich von 30 bis 50 Gew.-%, jeweils bezogen auf das Blockcopolymer A, liegt, und die Blöcke (S/B)_{A} und (S/B)_{B} durch einen Block S voneinander getrennt sind und das Blockcopolymer A eine lineare Struktur mit der Blockfolge S₁-(S/B)_{A}-S₂-(S/B)_{B}-S₃ aufweist, wobei S₁, S₂ und S₃ jeweils für einen Block S stehen

3. Blockcopolymer nach Anspruch 2, **dadurch gekennzeichnet, dass** das Gewichtsverhältnis der Copolymerblöcke (S/B)_{A} zu den Copolymerblöcken (S/B)_{B} im Bereich von 80 : 20 bis 50 : 50 liegt.

4. Blockcopolymer nach einem der Ansprüche 1 bis 3, **dadurch gekennzeichnet, dass** das gewichtsmittlere Molekulargewicht M_{w} des Block- oder Pfropfcopolymeren im Bereich von 250.000 bis 350.000 g/mol liegt.

5. Mischung, bestehend aus
K1) 20 bis 95 Gew.-% eines Blockcopolymeren nach einem der Ansprüche 1 bis 4, und
K2) 5 bis 80 Gew.-% Standardpolystyrol (GPPS) oder Schlagzähpolystyrol (HIPS), und
K3) 0 bis 50 Gew.-% eines von K1 verschiedenen Blockcopolymeren aus vinylaromatischen Monomeren und Dienen.

6. Mischung nach Anspruch 5, **dadurch gekennzeichnet, dass** sie 10 bis 50 Gew.-% eines Blockcopolymeren als Komponente K3 enthält, welches
a) mindestens einen Block S aus 95 bis 100 Gew.-% vinylaromatischen Monomeren und 0 bis 5 Gew.-% Dienen und
b) mindestens einen Homopolydien (B) oder Copolymerblock (S/B)_{B} aus 0 bis 60 Gew.-% vinylaromatischen Monomeren und 40 bis 100 Gew.-% Dienen mit einer Glasübergangstemperatur Tg_{B} im Bereich von 0 bis -110°C, enthält,
wobei der Gewichtsanteil der Summe aller Blöcke S im Bereich von 25 bis 90 Gew.-%, und der Gewichtsanteil der Summe aller Blöcke (S/B)_{B} im Bereich von 10 bis 75 Gew.-%, jeweils bezogen auf das Blockcopolymer, liegt.

7. Mischung nach Anspruch 5, **dadurch gekennzeichnet, dass** sie 10 bis 30 Gew.-% eines Blockcopolymeren als Komponente K3 enthält, welches
a) mindestens einen Block S aus 95 bis 100 Gew.-% vinylaromatischen Monomeren und 0 bis 5 Gew.-% Dienen und
b) mindestens einen Copolymerblock (S/B)_{B} aus 20 bis 60 Gew.-% vinylaromatischen Monomeren und 40 bis 80 Gew.-% Dienen mit einer Glasübergangstemperatur Tg_{B} im Bereich von 0 bis -80°C, enthält,
wobei der Gewichtsanteil der Summe aller Blöcke S im Bereich von 25 bis 70 Gew.-%, und der Gewichtsanteil der Summe aller Blöcke (S/B)_{B} im Bereich von 30 bis 75 Gew.-%, jeweils bezogen auf das Blockcopolymer, liegt.

8. Verwendung der Mischung nach einem der Ansprüche 5 bis 7 zur Herstellung von Folien oder Formteilen für die Verpackung von elektronischen Bauteilen.

9. Verwendung der Mischungen nach einem der Ansprüche 5 bis 7 zur Herstellung von Blisterverpackungen, Bechern oder extrudierten Hohlprofilen für die Verpackung von elektronischen Bauteilen.

## Claims

1. A block copolymer A with weight-average molar mass M_{w} of at least 100 000 g/mol, comprising
a) at least one block S composed of from 95 to 100% by weight of vinylaromatic monomers and from 0 to 5% by weight of dienes, and
b) at least one copolymer block (S/B)_{A} composed of from 63 to 80% by weight of vinylaromatic monomers and from 20 to 37% by weight of dienes, with glass transition temperature Tg_{A} in the range from 5 to 30°C, where
the proportion by weight of the entirety of all of the blocks S is in the range from 50 to 70% by weight, based on the block copolymer A, and
which block copolymer A has a linear structure having the block sequence S₁-(S/B)_{A}-S₂-(S/B)_{A}-S₃ where each of S₁, S₂, and S₃ is a block S.

2. A block copolymer A with weight-average molar mass M_{w} of at least 100 000 g/mol, comprising
a) at least one block S composed of from 95 to 100% by weight of vinylaromatic monomers and from 0 to 5% by weight of dienes, and
b) one copolymer block (S/B)_{A} composed of from 63 to 80% by weight of vinylaromatic monomers and from 20 to 37% by weight of dienes, with glass transition temperature Tg_{A} in the range from 5 to 30°C, and
c) one copolymer block (S/B)_{B} composed of from 20 to 60% by weight of vinylaromatic monomers and from 40 to 80% by weight of dienes, with glass transition temperature Tg_{B} in the range from 0 to -110°C,
where the proportion by weight of the entirety of all of the blocks S is in the range from 50 to 70% by weight, and the proportion by weight of the entirety of all of the blocks (S/B)_{A} and (S/B)_{B} is in the range from 30 to 50% by weight, based in each case on the block copolymer A, and there is a block S separating the blocks (S/B)_{A} and (S/B)_{B} from one another, and
which block copolymer has a linear structure having the block sequence S₁-(S/B)_{A}-S₂-(S/B)_{B}-S₃ where each of S₁, S₂ and S₃ is a block S.

3. The block copolymer according to claim 2, wherein the ratio by weight of the copolymer blocks (S/B)_{A} to the copolymer blocks (S/B)_{B} is in the range from 80 : 20 to 50 : 50.

4. The block copolymer according to any of claims 1 to 3, wherein the weight-average molar mass M_{w} of the block copolymer or graft copolymer is in the range from 250 000 to 350 000 g/mol.

5. A mixture, composed of
K1) from 20 to 95% by weight of a block copolymer according to any of claims 1 to 4, and
K2) from 5 to 80% by weight of standard polystyrene (GPPS) or impact-resistant polystyrene (HIPS), and
K3) from 0 to 50% by weight of a block copolymer which differs from K1 and is composed of vinylaromatic monomers and dienes.

6. The mixture according to claim 5, which comprises from 10 to 50% by weight of a block copolymer as component K3, where this block copolymer comprises
a) at least one block S composed of from 95 to 100% by weight of vinylaromatic monomers and from 0 to 5% by weight of dienes, and
b) at least one homopolydiene (B) or copolymer block (S/B)_{B} composed of from 0 to 60% by weight of vinylaromatic monomers and from 40 to 100% by weight of dienes, with glass transition temperature Tg_{B} in the range from 0 to -110°C,
where the proportion by weight of the entirety of all of the blocks S is in the range from 25 to 90% by weight, and the proportion by weight of the entirety of all of the blocks (S/B)_{B} is in the range from 10 to 75% by weight, based in each case on the block copolymer.

7. The mixture according to claim 5, which comprises from 10 to 30% by weight of a block copolymer as component K3, where this block copolymer comprises
a) at least one block S composed of from 95 to 100% by weight of vinylaromatic monomers and from 0 to 5% by weight of dienes, and
b) at least one copolymer block (S/B)_{B} composed of from 20 to 60% by weight of vinylaromatic monomers and from 40 to 80% by weight of dienes, with glass transition temperature Tg_{B} in the range from 0 to -80°C,
where the proportion by weight of the entirety of all of the blocks S is in the range from 25 to 70% by weight, and the proportion by weight of the entirety of all of the blocks (S/B)_{B} is in the range from 30 to 75% by weight, based in each case on the block copolymer.

8. The use of the mixture according to any of claims 5 to 7 for the production of foils or of moldings for the packaging of electronic components.

9. The use of the mixtures according to any of claims 5 to 7 for the production of blister packs, of pots, or of extruded hollow profiles, for the packaging of electronic components.

## Revendications

1. Copolymère séquencé A ayant une masse moléculaire moyenne en poids Mw d'au moins 100 000 g/mol, comprenant
a) au moins une séquence S formé de 95 à 100% en poids de monomères vinylaromatiques et de 0 à 5% en poids de diènes et
b) d'au moins une séquence de copolymère (S/B)_{A} formé de 63 à 80% en poids de monomères vinylaromatiques et de 20 à 37% en poids de diènes ayant une température de transition vitreuse Tg_{A} comprise dans l'intervalle de 5 à 30°C,
dans lequel le pourcentage pondéral de la somme de l'ensemble des séquences S est comprise dans l'intervalle de 50 à 70% en poids par rapport au copolymère séquencé A et dans lequel le copolymère séquencé A présente une structure linéaire formé de la succession de séquences S₁-(S/B)_{A}-S₂-(S/B)_{A}-S₃, où S₁, S₂ et S₃ représentent chacun une séquence S.

2. Copolymère séquencé A ayant une masse moléculaire moyenne en poids Mw d'au moins 100 000 g/mol, comprenant
a) au moins une séquence S formé de 95 à 100% en poids de monomères vinylaromatiques et de 0 à 5% en poids de diènes et
b) une séquence de copolymère (S/B)_{A} formé de 63 à 80% en poids de monomères vinylaromatiques et de 20 à 37% en poids de diènes ayant une température de transition vitreuse Tg_{A} comprise dans l'intervalle de 5 à 30°C, et
c) un copolymère séquencé (S/B)_{B} de 20 à 60% en poids de monomères vinylaromatiques et de 40 à 80% en poids de diènes ayant une température de transition vitreuse Tg_{B} comprise dans l'intervalle de 0°C à -110° C,
dans lequel le pourcentage pondéral de la somme de l'ensemble des séquences S est compris dans l'intervalle de 50 à 70% en poids, et la fraction en poids de la somme de toutes les séquences(S/B)_{A} et (S/B)_{B} est comprise dans l'intervalle de 30 à 50% en poids, tous exprimés par rapport au poids du copolymère séquencé A, les séquences (S/B)_{A} et (S/B)_{B}. étant séparées les unes des autres par une séquence S, le copolymère séquencé A présentant une structure linéaire qui est formée de la succession de séquences S₁-(S/B)_{A}-S₂-(S/B)_{A}-S₃, où S₁, S₂ et S₃ représentent chacun une séquence S.

3. Copolymère séquencé selon la revendication 2, **caractérisé en ce que** le rapport pondéral des séquences de copolymère (S/B)_{A} aux séquences de copolymère (S/B)_{B} est compris dans l'intervalle de 80/20 à 50/50.

4. Copolymère séquencé selon l'une des revendications 1 à 3, **caractérisé en ce que** le poids moléculaire moyen en poids Mw du copolymère séquencé est compris dans l'intervalle de 250 000 à 350 000 g/mol.

5. Mélange constitué de
- K1) 20 à 95% en poids d'un copolymère séquencé selon l'une des revendications 1 à 4 et
- K2) 5 à 80% en poids de polystyrène standard (GPPS) ou de polystyrène choc (HIPS), et
- K3) 0 à 50% en poids d'un copolymère séquencés formé de monomères vinylaromatiques et de diènes autres que K1.

6. Mélange selon la revendication 5, **caractérisé en ce qu'**il contient 10 à 50% en poids d'un copolymère séquencé en tant que composant K3 lequel contient:
a) au moins une séquence S de 95 à 100% en poids de monomères vinylaromatiques et de 0 à 5% en poids de diènes et
b) au moins un homopolydiène (B) ou une séquence copolymère (S/B)_{B} constituée de 0 à 60% en poids de monomères vinylaromatiques et de 40 à 100% en poids de diènes ayant une température de transition vitreuse Tg_{B} comprise entre 0 et 110° C,
dans lequel le pourcentage pondéral de la somme de l'ensemble des séquences S est compris dans l'intervalle de 25 à 90% en poids et la fraction en poids de la somme de toutes les séquences (S/B)_{B} est comprise dans l'intervalle de 10 à 75% en poids, tous ces pourcentages étant exprimés par rapport au poids du copolymère séquencé.

7. Mélange selon la revendication 5, **caractérisé en ce qu'**il contient en tant que composant K3 de 10 à 30% en poids d'un copolymère séquencé qui contient:
a) au moins une séquence S formée de 95 à 100% en poids de monomères vinylaromatiques et de 0 à 5% en poids de diènes et
b) au moins une séquence de copolymère (S/B)_{B} formée de 20 à 60% en poids de monomères vinylaromatiques et de 40 à 80% en poids de diènes ayant une température de transition vitreuse Tg_{B} comprise dans l'intervalle de 0 à -80°C,
dans lequel le pourcentage pondéral de la somme de l'ensemble des séquences S est compris dans l'intervalle de 25 à 70% en poids et la fraction en poids de la somme de toutes les séquences (S/B)_{B} est comprise dans l'intervalle de 30 à 75% en poids, tous ces pourcentages étant exprimés par rapport au poids du copolymère séquencé.

8. Utilisation du mélange selon l'une des revendications 5 à 7 pour la fabrication de films ou de moulages pour l'emballage de composants électroniques.

9. Utilisation des mélanges selon l'une des revendications 5 à 7 pour la fabrication de blisters, de coupelles ou de profilés creux extrudés pour le conditionnement de composants électroniques.
